# EUROPÄISCHE PATENTANMELDUNG

(11) **EP 1 810 881 A1**
(43) Veröffentlichungstag der Anmeldung: **25.07.2007**
(21) Anmeldenummer: 06126318.2
(22) Anmeldetag: 18.12.2006
(51) Int. Cl.: B60Q 1/04

(54) **Scheinwerfersystem**

(30) Priorität: 20.01.2006 DE 202006000878 U
(71) Anmelder: Hella KGaA Hueck & Co., 59552 Lippstadt (DE)
(72) Erfinder: Eichhorn, Dr. Karsten, 59329, Waderslo (DE); Pohlmann, Dr. Wolfgang, 59555, Lippstadt (DE); Buthe, Guido, 33178, Borchen (DE); Bücher, Mario, 53757, Augustin (DE)

(57) **Zusammenfassung**

Die Erfindung betrifft ein Scheinwerfersystem mit mindestens einer Leuchtdiode zur Erzeugung eines Lichtbündels für eine Lichtverteilung eines Scheinwerfers für Fahrzeuge. Ein die Leuchtdiode aufnehmendes Gehäuse ist auf der Vorderseite durch eine lichtdurchlässige Abschlussscheibe verschlossen. Weiterhin weist das Scheinwerfersystem mindestens ein Sensoriksystem , mindestens ein Elektroniksystem, mindestens ein Klimamanagement-System, mindestens ein Optiksystem und ein Aktoriksystem auf.

## Beschreibung

Die Erfindung betrifft ein Scheinwerfersystem mit mindestens einer Leuchtdiode.

Ein Scheinwerfersystem mit mindestens einer Leuchtdiode ist aus der DE - A - 102 42 864 bekannt.

Aufgabe der Erfindung ist, die Funktion eines Scheinwerfersystems mit mindestens einer Leuchtdiode zur Erzeugung eines Lichtbündels für eine Lichtverteilung eines Scheinwerfers für Fahrzeuge zu verbessern. Diese Aufgabe wird nach Erfindung durch die Merkmale des Anspruchs 1 gelöst.

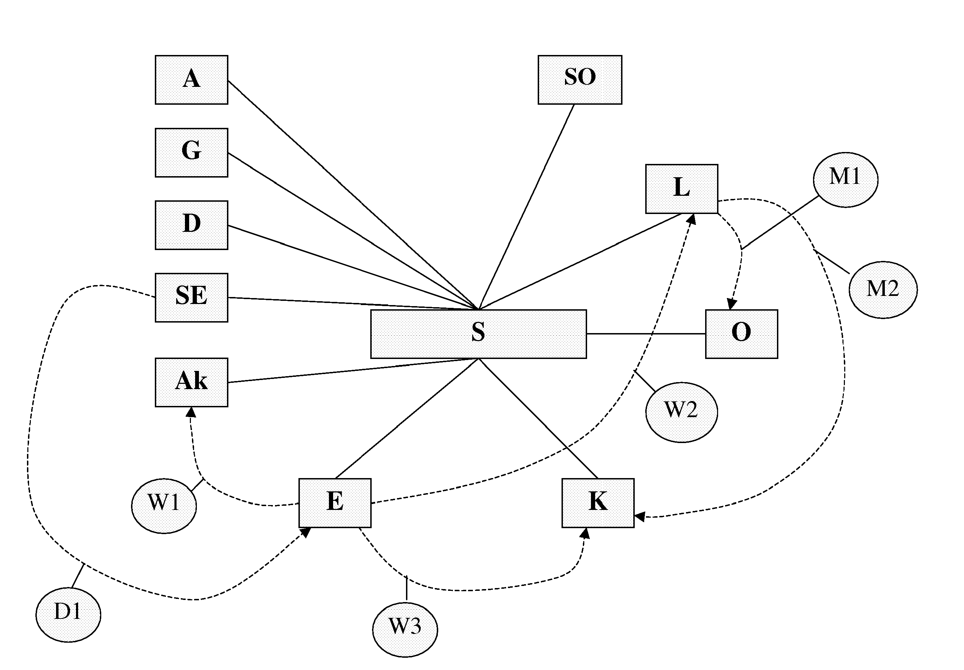

Vorteilhafte Weiterbildungen der Erfindung sind in den Unteransprüchen beansprucht und einem die Erfindung darstellenden Schaubild der Zeichnung zu entnehmen.

### Bezugszeichenliste:

- A =: Abschlussscheibe
- G =: Gehäuse
- D =: Designelement
- SE =: Sensoriksystem
- Ak =: Aktoriksystem
- E =: Elektroniksystem
- K =: Klimamanagement-System
- O =: Optiksystem
- L =: Leuchtdiode
- SO =: Softwaresystem
- M1 =: Mechanikverknüpfung
- M2 =: Mechanikverknüpfung
- D1 =: Datenverknüpfung
- W1 =: Wirkverbindung
- W2 =: Wirkverbindung
- W3 =: Wirkverbindung
- S =: Scheinwerfersystem

## Patentansprüche

1. Scheinwerfersystem (S) mit mindestens einer Leuchtdiode (L) zur Erzeugung eines Lichtbündels für eine Lichtverteilung eines Scheinwerfers für Fahrzeuge, mit einem die Leuchtdiode (L) aufnehmenden Gehäuse (G), mit einer die Vorderseite des Gehäuses (G) verschließenden lichtdurchlässigen Abschlussscheibe (A), mit mindestens einem Sensoriksystem (SE), mit mindestens einem Elektroniksystem (E), mit mindestens einem Klimamanagement-System (K), mit mindestens einem Optiksystem (O) und mit einem Aktoriksystem (Ak).

2. Scheinwerfersystem nach Anspruch 1, **dadurch gekennzeichnet, dass** zwischen dem Sensoriksystem (SE) und dem Elektroniksystem (E) eine Datenverbindung (D1) besteht.

3. Scheinwerfersystem nach Anspruch 1 oder 2, **dadurch gekennzeichnet, dass** zwischen dem Elektroniksystem (E) und dem Aktoriksystem (Ak) eine Wirkverbindung (W1) besteht.

4. Scheinwerfersystem nach einem der Ansprüche 1 bis 3, **dadurch gekennzeichnet, dass** zwischen dem Elektroniksystem (E) und der Leuchtdiode (L) eine Wirkverbindung (W2) besteht.

5. Scheinwerfersystem nach einem der Ansprüche 1 bis 4, **dadurch gekennzeichnet, dass** zwischen dem Elektroniksystem (E) und dem Klimamanagement-System (K) eine Wirkverbindung (W3) besteht.

6. Scheinwerfersystem nach einem der Ansprüche 1 bis 4, **dadurch gekennzeichnet, dass** zwischen der Leuchtdiode (L) und dem Optiksystem (O) eine Mechanikverknüpfung (M1) besteht.

7. Scheinwerfersystem nach einem der Ansprüche 1 bis 6, **dadurch gekennzeichnet, dass** zwischen der Leuchtdiode (L) und dem Klimamanagement-System (K) eine Mechanikverknüpfung (M2) besteht.

8. Scheinwerfersystem nach einem der vorstehenden Ansprüche, **dadurch gekennzeichnet, dass** das Sensoriksystem (SE) zur Erfassung der Temperatur und/oder Feuchtigkeit im Inneren des Scheinwerfers dient.

9. Scheinwerfersystem nach einem der vorstehenden Ansprüche, **dadurch gekennzeichnet, dass** das Elektroniksystem (E) eine Temperaturschaltung und/oder eine Leistungselektronik und/oder eine Sensorauswertung und/oder eine Aktoransteuerung und/oder eine Logik Ansteuerung und/oder eine Schnittstelle für ein Bussystem (LIN/CAN) und/oder eine Diagnose und/oder Klimasteuerung aufweist.

10. Scheinwerfersystem nach einem der vorstehenden Ansprüche, **dadurch gekennzeichnet, dass** das Aktoriksystem (Ak) passive Einstellelemente und/oder aktive Elemente zum Beispiel für eine Leuchtweite- oder Kurvenlichtregelung aufweist.

11. Scheinwerfersystem nach einem der vorstehenden Ansprüche, **dadurch gekennzeichnet, dass** die Leuchtdiode (L) aus einem Leuchtdioden-Einzelchip, einem Leuchtdioden-Mehrchip oder einem Leuchtdioden-Array besteht.

12. Scheinwerfersystem nach einem der vorstehenden Ansprüche, **dadurch gekennzeichnet, dass** das Optiksystem (O) eine Primäroptik und/oder Sekundäroptik aufweist.

13. Scheinwerfersystem nach einem der vorstehenden Ansprüche, **dadurch gekennzeichnet, dass** das Klimamanagement-System (K) ein aus einem Lüfter und/oder einer Pumpe und/oder Heizungseinrichtung bestehendes aktives System ist.

14. Scheinwerfersystem nach einem der vorstehenden Ansprüche, **dadurch gekennzeichnet, dass** das Klimamanagement-System (K) ein passives System ist, das zum Beispiel aus einem Kühlkörper und/oder einer Membran und/oder einer Heatpipe und/oder oder einen Luftkanal aufweisenden Wärmeabführungselement besteht.

15. Scheinwerfer nach einem der vorstehenden Ansprüche, **dadurch gekennzeichnet, dass** Klimamanagementsystem (K) eine Kombination von aktivem und passivem System darstellt.

16. Scheinwerfer nach einem der vorstehenden Ansprüche, **dadurch gekennzeichnet, dass** das Klimamanagementsystem (K) oder Teile desgleichen Bestandteil des Gehäuses (G) und/oder der Absschlussscheibe (A) sind.

17. Scheinwerfersystem nach einem der vorstehenden Ansprüche, **dadurch gekennzeichnet, dass** mindestens ein Designelement (D) im Inneren des Gehäuses (G) angeordnet ist.

18. Scheinwerfersystem nach Anspruch 17, **dadurch gekennzeichnet, dass** Designelement (D) mindestens einen Abdeckrahmen und/oder mindestens eine Blende beinhaltet.

19. Scheinwerfersystem nach einem der vorstehenden Ansprüche, **dadurch gekennzeichnet, dass** ein Softwaresystem (SO) Algorithmen, eine Sensorauswertung, eine Logik Ansteuerung, eine Schnittstelle LIN/CAN und/oder ein Diagnosesystem beinhaltet.

20. Scheinwerfersystem nach einem der vorstehenden Ansprüche, **dadurch gekennzeichnet, dass** das Elektroniksystem (E) aus Hard- und/oder Softwaresystem besteht.
